(19) Europäisches Patentamt
European Patent Office
Office européen des brevets

(11) **EP 0 992 273 B1**

(12) **FASCICULE DE BREVET EUROPEEN**

(45) Date de publication et mention
de la délivrance du brevet:
**21.07.2004 Bulletin 2004/30**

(51) Int Cl.⁷: **B01D 45/14**, B01D 46/26

(21) Numéro de dépôt: **98203366.4**

(22) Date de dépôt: **06.10.1998**

(54) **Séparateur centrifuge rotatif à tiges**

Drehbarer Zentrifugalabscheider mit Stangen

Centrifugal rotary separator with rods

(84) Etats contractants désignés:
**BE DE FR GB**

(43) Date de publication de la demande:
**12.04.2000 Bulletin 2000/15**

(73) Titulaire: **Techspace aero**
**4041 Milmort - Herstal (BE)**

(72) Inventeurs:
• **Tran, Quac Hung**
**4020 Liege (BE)**
• **Pacchioni, Lorenzo**
**4690 Roclenge/S/Geer (BE)**

(74) Mandataire: **Berrou, Paul**
**Snecma Moteurs**
**Propriété Intellectuelle,**
**B.P. 81**
**91003 Evry Cedex (FR)**

(56) Documents cités:
**EP-A- 0 780 546**     **DE-A- 19 522 855**
**FR-A- 2 299 898**

**Description**

La présente invention concerne un appareil pour séparer un brouillard d'huile dispersé dans l'air d'une enceinte à huile contenant les paliers d'un turboréacteur.

L'origine du mélange air-huile dans l'enceinte de paliers du turboréacteur provient de la lubrification des roulements par l'huile venant du réservoir d'huile et les entrées d'air de fuite des systèmes d'étanchéité, pressurisés par le compresseur, comme labyrinthe, joint carbone, joint à brosse, joint à huile....

Pour assurer l'équilibre thermodynamique dans l'enceinte de paliers et la lubrification des roulements pendant de longues missions de l'avion, le mélange air-huile doit être séparé. L'huile doit être récupérée et retournée dans le réservoir d'huile et l'air doit être évacué en dehors de l'enceinte donc dans l'atmosphère.

La séparation du mélange air-huile pour des particules d'huile de quelques microns est effectuée par un séparateur centrifuge placé sur l'arbre du compresseur ou par un séparateur centrifuge placé sur l'arbre du boîtier d'engrenages. Dans ces configurations, le mélange air-huile entre dans le séparateur, les particules d'huile plus lourdes sont freinées par le séparateur et projetées dans l'enceinte par la force centrifuge puis collectées et retournées dans le réservoir, tandis que l'air passe à travers du séparateur et évacue vers l'atmosphère par l'échappement.

En général, les séparateurs centrifuges sont capables de séparer les mélanges gaz-solide, gaz-liquide ou liquide-liquide. L'utilisation des séparateurs centrifuges trouve place dans de nombreuses applications et dans de nombreux domaines, par exemple dans les industries aéronautique, chimique, pharmaceutique ou encore dans les centrale nucléaires.

Jusqu'à présent, dans les turboréacteurs, plusieurs types de séparateur air-huile sont utilisés:

* type "cheminée",
* type "milieu poreux à éponge métallique,
* type "nid d'abeille".

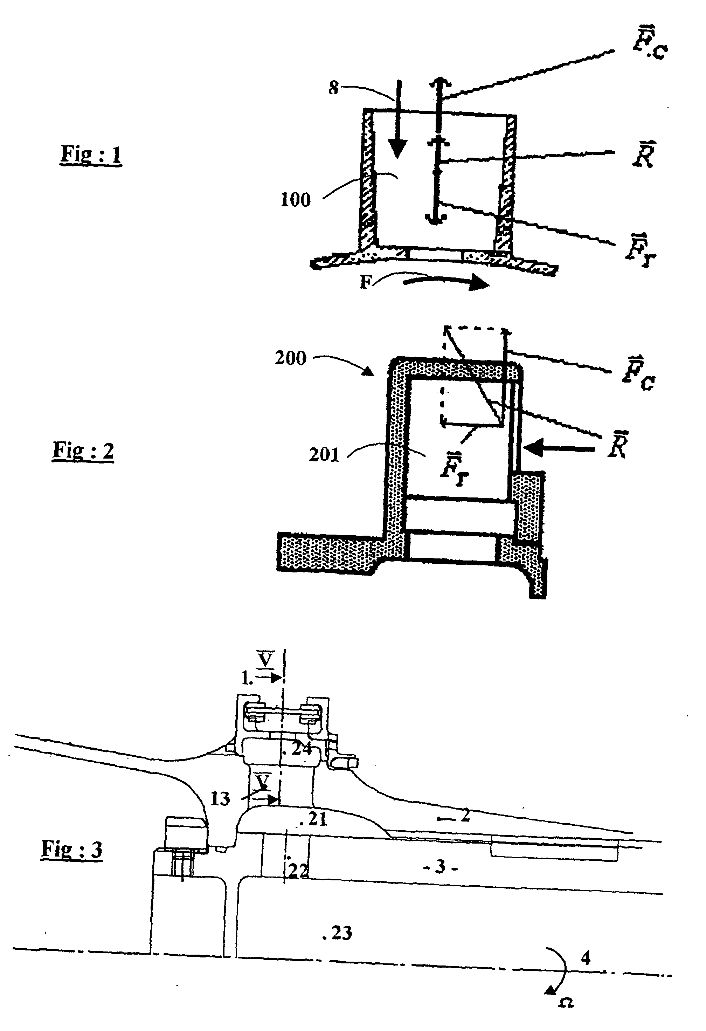

Un séparateur type cheminées tel que schématiquement représenté sur la figure 1 des dessins joints est composé d'une série de cheminées 100 disposées sur toute la circonférence de l'arbre du rotor, le mélange air-huile pénètre radialement dans les cheminées 100, suivant la flèche f. Les particules d'huile du mélange air-huile possèdent donc une vitesse de pénétration, cette vitesse est dirigée radialement vers l'axe de rotation du séparateur. La force radiale générant cette vitesse est appelée la force de traînée ($\vec{F}_T$). La rotation du séparateur symbolisée par la flèche F génère une force centrifuge sur les particules d'huile en rotation ($\vec{F}_C$) dirigée, elle aussi, radialement mais vers l'intérieur de l'enceinte. La somme vectorielle de ces forces donne la force de séparation ($\vec{R}$) radiale exercée sur les particules d'huile

$$\vec{F}_C + \vec{F}_T = \vec{R}$$

avec $\vec{R} < \vec{F}_C$
et $\vec{R} > 0$
$\vec{R} > 0$ vers l'enceinte pour assurer la séparation $|\vec{F}_C| > |\vec{F}_T|$

Dans le cas d'un séparateur du type "milieu poreux" ou "à nid d'abeille" schématiquement représenté sur la figure 2, le mélange air-huile pénètre axialement sur toute la circonférence du séparateur 200. Le milieu poreux 201 ou le nid d'abeille jouent le rôle de filtrage des particules d'huile pour les envoyer ensuite dans l'enceinte par la force centrifuge. Dans le séparateur du type milieu poreux ou nid d'abeille, les mêmes forces apparaissent que dans celui du type cheminées, mais avec quelques différences :

* la force de traînée ($\vec{F}_T$) est dirigée axialement,
* la force centrifuge ($\vec{F}_C$) est toujours radiale vers l'enceinte,
* la force de séparation ($\vec{R}$) résultante de ($\vec{F}_T$) et ($\vec{F}_C$) dirige, obliquement par rapport à ($\vec{F}_C$) dans le plan de l'axe de rotation, vers l'enceinte.

$$\vec{F}_C + \vec{F}_T = \vec{R}$$

avec $|\vec{R}| > |\vec{F}_C|$
$\vec{R}$ toujours > 0 vers l'enceinte pour assurer la séparation.

FR-A 2.299.898 illustre un exemple d'une telle réalisation.

Un des buts de l'invention est d'assurer l'efficacité de la séparation du mélange air-huile en évitant les inconvénients des réalisations connues antérieures, notamment l'entrée axiale imposée par la solution antérieure représentée sur la figure 2 ou les risques de remélange présentés par la solution antérieure représentée sur la figure 1.

L'invention vise également à obtenir une simplification de la fabrication de l'appareil et à permettre une adaptation aisée aux conditions particulières de fonctionnement suivant les applications, en disposant de paramètres réglables en vue d'obtenir un calibrage déterminé adapté aux débits demandés et aux tailles de particules. L'invention vise en outre une bonne fiabilité de fonctionnement et à assurer des facilités de nettoyage et de contrôle du séparateur.

L'invention concerne donc un séparateur centrifuge rotatif comprenant une chambre annulaire rotative, une entrée radiale d'admission d'une suspension d'un brouillard de liquide et/ou de particules solides dispersés dans un gaz, une sortie radialement intérieure pour le passage du gaz propre, une sortie radialement extérieure pour l'évacuation du liquide et/ou des particules solides et une garniture filtrante à travers laquelle transite le gaz.

Selon l'invention, le séparateur centrifuge rotatif est caractérisé en ce que ladite garniture filtrante est formée d'une cartouche axisymétrique composée d'un ensemble de nappes de tiges placées en quinconce et parallèles à l'axe de rotation du séparateur et fixées rigidement à chaque extrémité sur un anneau radialement intérieur et un anneau radialement extérieur, ladite cartouche est frettée au niveau desdits anneaux radialement extérieurs dans un flasque arrière et un flasque avant délimitant ladite chambre annulaire et est bloquée tangentiellement par un élément de blocage anti-rotation au niveau desdits anneaux radialement intérieurs de manière que en cheminant autour de la surface des tiges de la garniture filtrante les gouttes de liquide et/ou les particules solides sont freinées et se projettent vers l'extérieur de la chambre à travers la sortie radiale extérieure sous l'action d'une force résultant de la force centrifuge et de la force de traînée, ladite résultante étant située dans un plan perpendiculaire à l'axe de rotation du séparateur et dirigée obliquement par rapport à la force centrifuge.

D'autres caractéristiques et avantages de l'invention seront mieux compris à la lecture de la description qui va suivre d'un mode de réalisation de l'invention, en référence aux dessins annexés sur lesquels :

- la figure 1 précédemment décrite montre un schéma de principe d'une réalisation connue antérieure d'un séparateur de type à cheminées ;

- la figure 2 précédemment décrite montre un schéma de principe d'une réalisation connue antérieure d'un séparateur de type à milieu poreux ;

- la figure 3 représente une demi-vue schématique en coupe par un plan longitudinal passant par l'axe de rotation d'un séparateur centrifuge rotatif conforme à l'invention, monté sur un arbre creux ;

- la figure 4 montre un détail agrandi de la figure 3 ;

- la figure 5 représente une vue en coupe par un plan perpendiculaire à l'axe de rotation de la cartouche filtrante du séparateur représenté sur les figures 3 et 4, selon V.V de la figure 3 ;

- la figure 6 montre un détail agrandi de la figure 5 ;

- la figure 7 représente une vue en perspective de la cartouche filtrante représentée sur les figures 5 et 6.

Comme représenté sur la figure 3, un séparateur centrifuge rotatif 1 conforme à l'invention est monté sur un arbre creux 2. L'arbre creux est entraîné par un autre arbre creux 3, configuration correspondant notamment à une application à une enceinte de palier de turboréacteur.

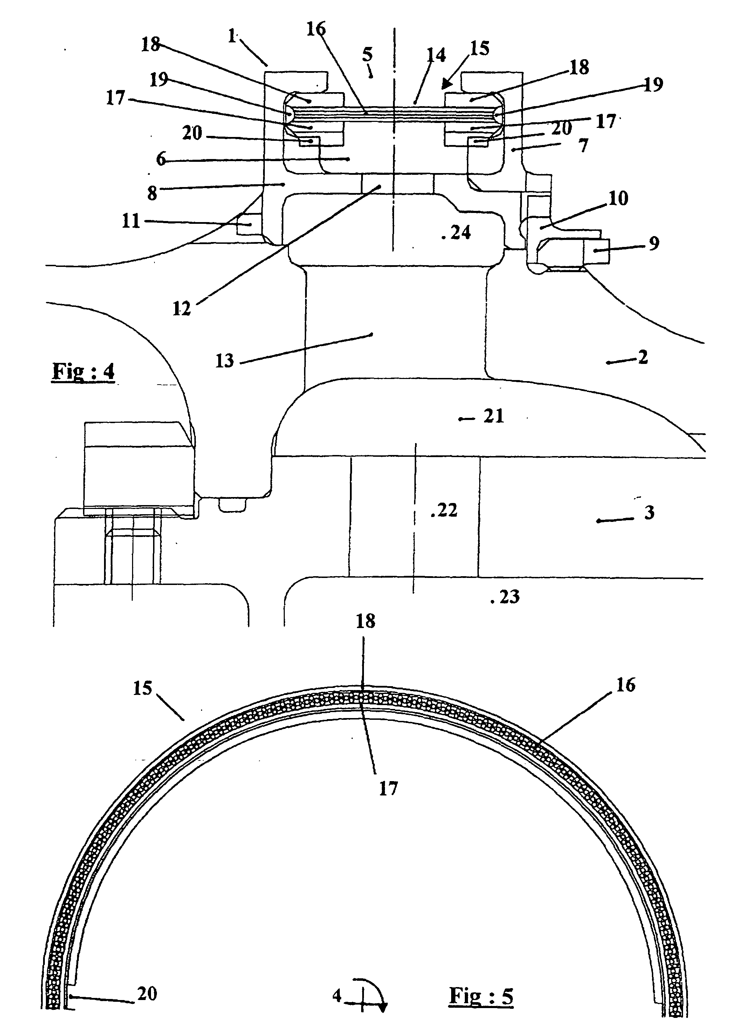

Une suspension d'un brouillard de liquide ou/ et de particules solides dispersé dans un gaz est amenée à l'entrée du séparateur 1 par l'intermédiaire d'une ouverture radiale 5. Dans l'application indiquée, il s'agit notamment d'un mélange air-huile. Comme représenté sur la figure 4, le séparateur 1 comprend une chambre rotative 6 formée par un flasque arrière 7, un flasque avant 8. L'ensemble est maintenu par un écrou 9, un contre écrou avec blocage anti-rotation 10 et un blocage anti-rotation 11 sur l'arbre.

Une sortie 12 pour le gaz propre est prévue à la partie inférieure du séparateur sous forme de sections de passage radialement calibrées, par exemple 12 perçages de diamètre 10 mm, dans le flasque avant 8 communiquant avec des sections de passage du gaz radialement calibrées 13, par exemple 4 perçages de diamètre 25 mm dans l'arbre creux 2 par l'intermédiaire de la chambre 24. La sortie 13 communique avec une chambre 21 puis avec des sections de passage radialement calibrées 22, par exemple 4 perçages de diamètre 18 mm, dans l'arbre creux 3 avant l'échappement 23. Une sortie radiale pour les gouttelettes de liquide ou/et pour les particules solides 14 est prévue à la partie supérieure du séparateur.

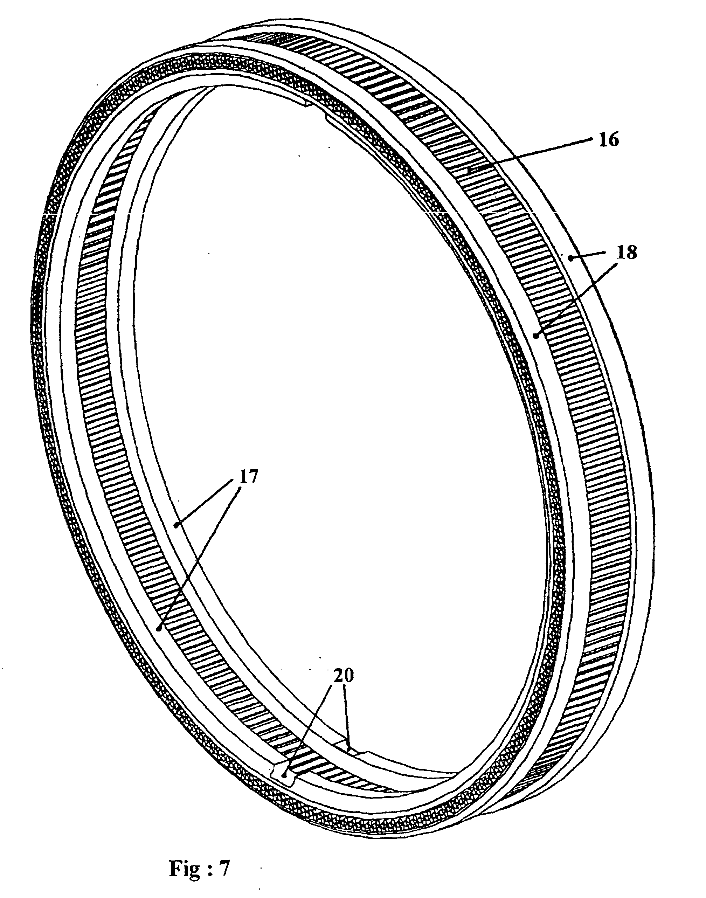

A l'intérieur du séparateur centrifuge rotatif 1, il est prévu une garniture filtrante 15 axisymétrique, représentée en détails sur les figures 5 à 7. La garniture se présente sous forme de cartouche filtrante 15, comprenant un ensemble de nappes de tiges 16 métalliques placées en quinconce et parallèles à l'axe de la machine 4. Ces nappes sont maintenues rigidement aux extrémités par les anneaux intérieur 17 et extérieur 18 avec une soudure 19.

Cette garniture filtrante est frettée dans les flasques 7 et 8 au niveau des anneaux extérieurs 18 et bloquée tangentiellement par un blocage anti-rotation 20 au niveau des anneaux intérieurs 17.

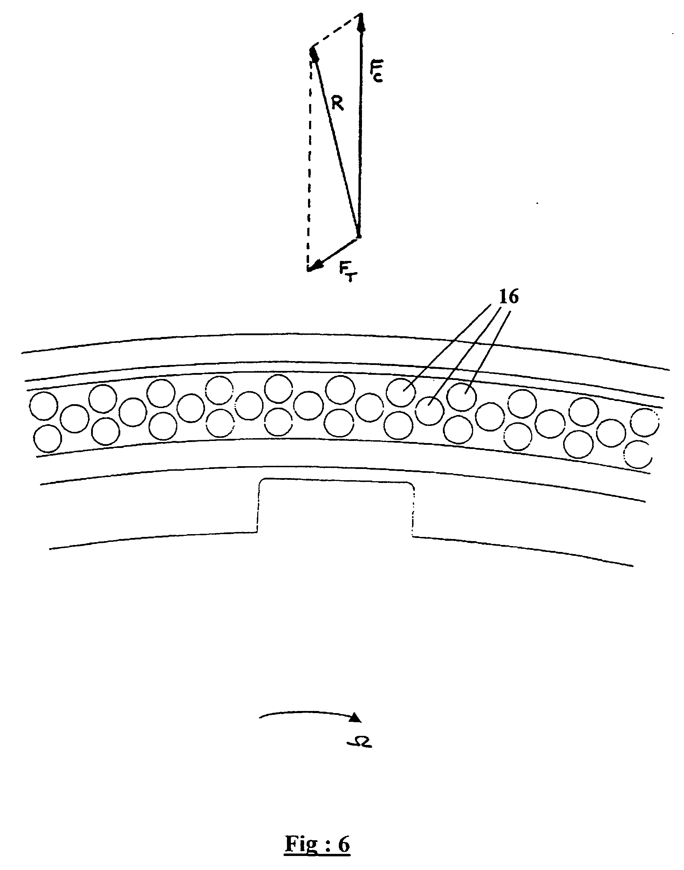

Comme schématiquement représenté par le diagramme des forces de la figure 6, en fonctionnement, la suspension d'un brouillard de liquide ou/et de solide dispersé dans un gaz pénètre sous pression par la force de traînée ($\vec{F}_T$), obliquement par rapport à l'axe radial, dans l'ouverture 5 et s'écoule autour de la surface cylindrique des tiges métalliques de la garniture filtrante 15. Les gouttelettes de liquide ou/et les particules solides sont freinées par les sections de passage entre les tiges et se projettent obliquement par rapport à l'axe radial par la résultante ($\vec{R}$) de la force centrifuge ($\vec{F}_C$) et de la force de traînée ($\vec{F}_T$) vers l'extérieur de la chambre rotative à travers la sortie 14 puis l'ouverture 5. Par contre le gaz propre passe à travers le séparateur centrifuge rotatif à tiges vers la sortie 12 puis la sortie 13 pour arriver à la fin l'échappement 23.

La somme vectorielle des forces donne la force de séparation ($\vec{R}$) exercée sur les particules d'un brouillard de liquide, par exemple l'huile ou/et de particules solides dispersés dans un gaz, par exemple l'air.

Cette force est dirigée obliquement par rapport à ($\vec{F}_C$) dans le plan perpendiculaire à l'axe de rotation.

$$\vec{F}_C + \vec{F}_T = \vec{R}$$

avec $\vec{R} < \vec{F}_C$
et $\vec{R} > 0$
$\vec{R} > 0$ vers l'enceinte pour assurer la séparation.
Dans l'exemple de réalisation décrit ci-dessus en référence aux figures 3 à 7, les tiges 16 de la cartouche filtrante 15 sont métalliques mais en variante, un matériau composite, notamment à base de carbone peut être utilisé.

## Revendications

1. Séparateur centrifuge rotatif comprenant une chambre annulaire rotative (6), une entrée radiale (5) d'admission d'une suspension d'un brouillard de liquide et/ou de particules solides dispersés dans un gaz, une sortie radialement intérieure (12) pour le passage du gaz propre, une sortie radialement extérieure (14) pour l'évacuation du liquide et/ou des particules solides et une garniture filtrante (15) à travers laquelle transite le gaz **caractérisé en ce que** ladite garniture filtrante (15) est formée d'une cartouche axisymétrique composée d'un ensemble de nappes de tiges (16) placées en quinconce et parallèles à l'axe de rotation du séparateur (1) et fixées rigidement à chaque extrémité sur un anneau radialement intérieur (17) et un anneau radialement extérieur (18), ladite cartouche est frettée au niveau desdits anneaux radialement extérieurs (18) dans un flasque arrière (7) et un flasque avant (8) délimitant ladite chambre annulaire (6) et est bloquée tangentiellement par un élément de blocage (20) anti-rotation au niveau desdits anneaux radialement intérieurs (17) de manière que en cheminant autour de la surface des tiges (16) de la garniture filtrante les gouttes de liquide et/ou les particules solides sont freinées et se projettent vers l'extérieur de la chambre (6) à travers la sortie radiale extérieure (14) sous l'action d'une force résultante R de la force centrifuge Fc et de la force de traînée Ft, ladite résultante R étant située dans un plan perpendiculaire à l'axe de rotation du séparateur et dirigée obliquement par rapport à la force centrifuge Fc.

2. Séparateur centrifuge rotatif selon la revendication 1 **caractérisé en ce que** lesdites tiges (16) sont métalliques et fixées par soudure sur les anneaux intérieurs (17) et extérieurs (18).

3. Séparateur centrifuge rotatif selon l'une quelconque des revendications 1 à 2 **caractérisé en ce qu'**il est placé dans une enceinte à huile contenant les paliers d'un turboréacteur et entraîné en rotation par un arbre du turboréacteur et que l'air purifié est dirigé vers une enceinte sans contaminant, huile et/ou particules solides.

## Patentansprüche

1. Drehbarer Zentrifugalscheider mit einer ringförmigen, drehbaren Kammer (6), einer radialen Einlassöffnung (5) für eine Suspension eines Flüssigkeitsnebels und/oder eines Nebels mit festen Partikeln, die in einem Gas dispergiert sind, einer radial innenliegenden Austrittsöffnung (12) für den Durchgang des Gases selbst, einer radial außenliegenden Austrittsöffnung (14) für die Abfuhr der Flüssigkeit und/oder der festen Partikel sowie mit einem Filter (15), durch den das Gas dringt,
   **dadurch gekennzeichnet,**
   **dass** dieser Filter (15) von einem axialsymmetrischen Filtereinsatz gebildet wird, der aus Lagen von im Zickzack und parallel zur Drehachse des Scheiders (1) angeordneten Stäben (16) besteht, die mit jedem Ende starr an einem radial innenliegenden Ring (17) und einem radial außenliegenden Ring (18) befestigt sind, wobei dieser Filtereinsatz in Höhe der genannten radial außenliegenden Ringe (18) in einem die genannte ringförmige Kammer (6) umgrenzenden hinteren Flansch (7) und vorderen Flansch (8) eingeschnürt ist und in Höhe der genannten radial innenliegenden Ringe (17) tangential durch ein Drehsperrelement (20) blockiert ist, so dass die Flüssigkeitstropfen und/oder festen Partikel, die um die Oberfläche der Stäbe (16) des Filtereinsatzes kriechen, blockiert werden und unter Einwirkung einer resultierenden Kraft (R) aus der Zentrifugalkraft ($F_C$) und der Widerstandskraft ($F_T$) durch die radial außenliegende Austrittsöffnung (14) aus der Kammer (6) geschleudert werden, wobei diese Resultierende (R) in einer Ebene verläuft, die im rechten Winkel zu der Drehachse des Scheiders liegt und schräg zur Zentrifugalkraft ($F_C$) ausgerichtet ist.

2. Drehbarer Zentrifugalscheider nach Anspruch 1,
   **dadurch gekennzeichnet,**
   **dass** die Stäbe (16) aus Metall bestehen und durch Schweißung an den innenliegenden Ringen (17) und außenliegenden Ringen (18) befestigt sind.

3. Drehbarer Zentrifugalscheider nach einem der Ansprüche 1 bis 2,
   **dadurch gekennzeichnet,**
   **dass** er in einem umschlossenen, ölhaltigen Raum angeordnet ist, in welchem sich die Lager eines Turbotriebwerks befinden, und von einer Welle des Turbotriebwerks in Drehbewegung versetzt wird, und dass die gereinigte Luft einem umschlossenen Raum ohne Verunreinigung, Öl und/oder feste Partikel zugeführt wird.

## Claims

1. Rotating centrifugal separator comprising a rotating annular chamber (6), a radial inlet (5) for the admission of a suspension of liquid droplets and/or solid particles dispersed in a gas, a radially interior outlet (12) for the passage of clean gas, a radially exterior outlet (14) for the evacuation of the liquid and/or the solid particles and a filter insert (15) through which the gas transits, **characterized in that** the said filter insert (15) is formed from an axisymmetric cartridge composed of an assembly of rows of rods (16) placed in a staggered pattern and parallel to the rotation axis of the separator (1) and rigidly fixed at each end to a radially interior ring (17) and a radially exterior ring (18), the said cartridge is shrouded at the said radially exterior rings (18) by a rear flange (7) and a forward flange (8) forming the said annular chamber (6) and is fixed tangentially by an anti-rotation locking-element (20) against the said radially interior rings (17) such that, in being driven around the surface of the filter insert rods (16), the liquid droplets and/or solid particles are slowed down and projected towards the outside of the chamber (6) through the exterior radial outlet (14) by the action of a force R that is a resultant of the centrifugal force $F_c$ and the drag force $F_t$, the said resultant force R lying in a plane perpendicular to the axis of rotation of the separator and directed obliquely to the centrifugal force $F_c$.

2. Rotating centrifugal separator according to Claim 1, **characterized in that** the said rods (16) are metallic and are welded to the interior rings (17) and exterior rings (18).

3. Rotating centrifugal separator according to either of Claims 1 and 2, **characterized in that** it is placed in an oil sump containing the bearings of a turbojet engine and is driven in rotation by a shaft of the engine and **in that** the purified air is directed towards a chamber free of contaminants, namely oil and/or solid particles.

Fig : 1

Fig : 2

Fig : 3

Fig : 4

Fig : 5

$F_C$

$R$

$F_T$

16

$\Omega$

**Fig : 6**

Fig : 7